# EUROPEAN PATENT SPECIFICATION

(11) **EP 3 630 616 B1**
(45) Date of publication and mention of the grant of the patent: **04.09.2024**
(21) Application number: 18733344.8
(22) Date of filing: 31.05.2018
(51) Int. Cl.: B65B 7/16, B65B 59/04, B29C 65/02, B29C 65/74

(54) **APPARATUS FOR MANUFACTURING CONTAINERS**
VORRICHTUNG ZUR HERSTELLUNG VON BEHÄLTERN
APPAREIL DE FABRICATION DE RÉCIPIENTS

(30) Priority: 01.06.2017 IT 201700060407
(43) Date of publication of application: 08.04.2020
(73) Proprietor: Machsolutions SA, 6826 Riva San Vitale (CH)
(72) Inventor: HEER, Brigitte, 6864 Arzo (CH); CORTI, Marco, 50031 Barberino Del Mugello (Firenze) (IT)
(74) Representative: Nesti, Antonio
(86) International application number: PCT/IB2018/053884
(87) International publication number: WO 2018/220574

(56) References cited:
- WO-A1-2013/006545
- FR-A1- 2 903 078
- FR-A1- 2 928 626
- FR-A1- 2 963 322
- US-A- 3 488 472

## Description

### Technical field

The present invention relates to an apparatus for manufacturing containers, and in particular for manufacturing containers by sealing with a film.

More particularly, the invention relates to an apparatus for manufacturing containers for food use.

### State of the art

At present, machines are known which comprise a vacuum pump placed in communication with a chamber inside which a preformed bag, opened on three sides, is usually positioned inside which a food product or any other product is placed to be vacuum-packed.

In such machines of known type, the preformed bag is inserted into the vacuum chamber, after which the air contained in the chamber is sucked, thereby carrying out the vacuum and subsequently, the welding is carried out.

Such machines of known type entail the necessity of having to use preformed bags having a dimension comparable to that of the product.

From IT1403023 it is known a packaging device which comprises a vacuum chamber which can be opened to receive a length of at least one single-fold film with the container to be packaged inserted therein, and to close it hermetically thereby producing the vacuum and / or creating an atmosphere with an appropriate gas. In this machine, welding means are provided in the vacuum chamber comprising a concentric arrangement of welding elements in the upper part which operate together with a plurality of lower moulds which alternate in a coaxial position with respect to the upper elements to perform welds in different formats.

From FR2928626 it is disclosed a device having upper and lower bells that are vertically displaced between open and closed positions and the lower bell is horizontally displaceable between a welding position and a loading position into which a detachable support plate carrying a number of trays can be removed.

From FR2903078 it is disclosed a device to heat seal a tray positioned in a matrix consisting of a frame defined by arms connected together by a movable slide to modify the dimensions of a single compartment delimited by the two longitudinal arms and use the device for sealing different formats of containers or trays.

From FR2963322 it is disclosed a heat sealing device adaptable to various formats of containers to be sealed, which device has an upper and a lower bell that are vertically displaced between open and closed positions and a support plate provided with one or more openings for receiving containers which is capable of being removably mounted on the lower bell.

From WO2013/006545 it is disclosed a sealing apparatus for sealing a laminate film onto a container including a bottom housing assembly having a container support for holding a container in place and a drawer which can be pulled out of the bottom assembly via rails to receive a container and then slid back into the bottom assembly to seal the container.

From US3488472 it is disclosed a manual heat-sealing device of containers capable of accommodating containers of different sizes.

Machines of the known type generally have the drawback of making the washing step of the tanks of the lower moulds difficult.

A further drawback has been found in the relative difficulty in varying in a simple and rapid way not only the size of the formats but also the geometric shape of the same.

Therefore, the need is felt to allow the operator who uses the machine to easily clean the moulds and the tank, and the maintenance technician who intervenes to adapt or modify the equipment, to easily replace and overhaul the moulds and the welding means / blades, so that the machine can work with different formats in terms of shape and size, and in greater number with respect to the solutions currently in use.

### Object of the invention

The present invention aims to overcome the drawbacks of the already known solutions and to propose a machine for manufacturing containers which allows the operator an easy access to cleaning and to the replacement of the lower moulds.

### Summary of the Invention

These objects have been achieved by realizing an apparatus for manufacturing containers according to at least one of the appended claims.

A first advantage consists of the fact that easy access to the lower tubs of the sealing station is allowed for the washing operations between processing cycles comprising the sealing of trays of different formats.

A second advantage consists of the possibility to easily change the format of the moulds, both in terms of size and shape.

### List of drawings

These and other advantages will be better understood by anyone skilled in the art, from the description below and from the appended drawings, given as non-limiting example, in which:

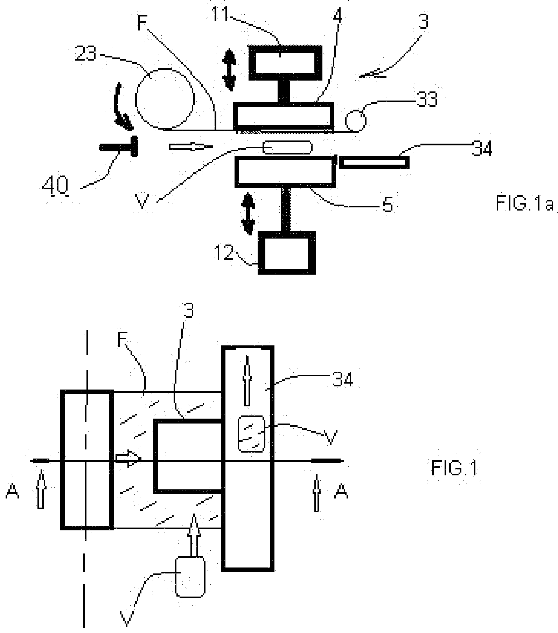

- Figures 1 and 1a respectively show an apparatus according to the invention in plan and in section A-A;

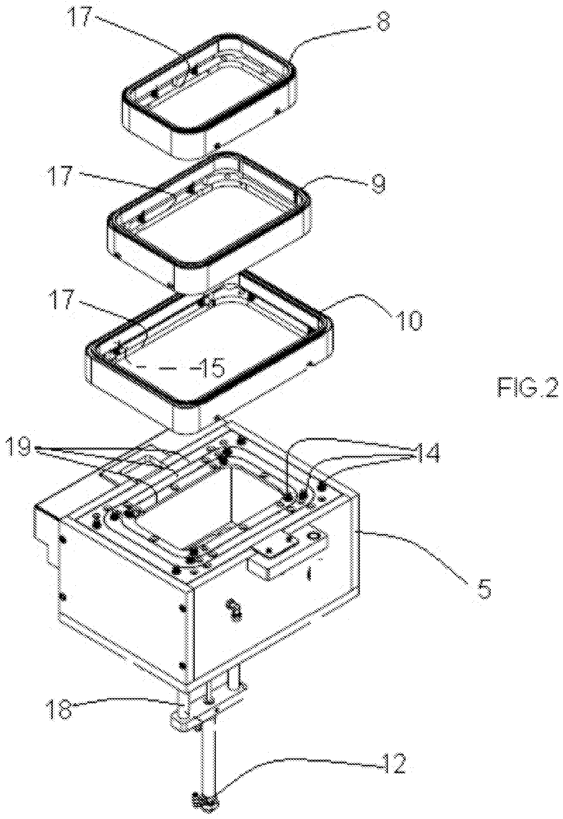

- Figure 2 shows an exploded view of the sealing station of an apparatus according to the invention;

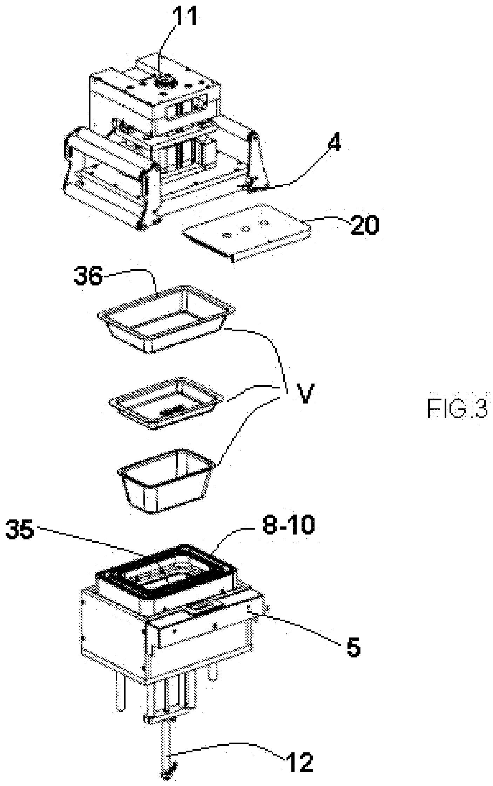

- Figure 3 shows an exploded view of a preferred embodiment of the sealing station of an apparatus according to the invention;
- Figure 4 shows a detail of a sealing plate of the sealing station of figure 3 seen from below.
- Figures 5-5a show respectively a top view detail of the lower section of the sealing station of figure 3 and a section AA thereof.
- Figure 6 shows a detail of a preferred shape of the quick release means of the moulds;
- Figure 7 shows a preferred embodiment of the lower moulds;
- Figures 8 and 9 show in detail, respectively, a top view and a bottom view of a preferred embodiment of the quick release means for the lower moulds;
- Figures 10-12 show in detail, respectively, a side view in an extracted configuration, a side view in an operative configuration and a perspective view of a preferred embodiment of the means for engaging and extracting the upper welding plate.

### Detailed description

With reference to the accompanying drawings, an apparatus for manufacturing containers V with a film F is described.

Depending on the applications, the containers are fed automatically, for example by means of conveyor belts, or manually, to a sealing station 3 arranged to seal the containers with a portion of film transiting above the container V, the film being unwound and rewound, for example, by motorized coils 23, 33 for feeding and recovery.

In the example described, the film F is a flat film which in use is superimposed on the containers V for the sealing, carried out preferably by thermal welding of the film on the upper outer edge of the container.

However, different films can be used, for example folded or tubular films, for the packaging of containers inserted into two opposing film flaps.

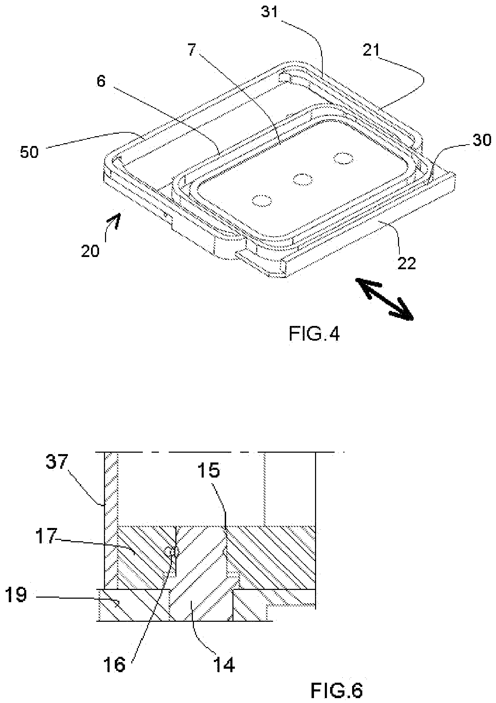

The sealing station further comprising an upper section 4 and a lower section 5 which can be superimposed on command. The upper section 4 is provided with at least one upper sealing profile 50, 6, 7, see Figure 4, and said lower section is provided with a plurality of moulds 8, 9, 10 arranged to accommodate at least one container having a selected format, as well as the cutting means of the film once the welding is completed.

Preferably, the superimposing of the upper and lower sections is obtained by means of movements 11, 12, for example actuating cylinders, capable of moving one or both of the sections between a detached position for loading the containers to be sealed and an operative sealing position. Preferably, the superimposing is obtained by means of vertical movement means 11, 12 for superimposing at least one upper profile with one of the lower moulds, comprising lifting means 12 of a mould of a selected format corresponding to said upper sealing profile.

For example, the vertical movement means may comprise lower actuating cylinders 12 arranged to move individually the lower moulds and / or the upper actuating cylinders 11 arranged to move the upper section of the sealing station. According to the invention, the lower moulds can be extracted individually and / or collectively from said lower station by means of quick release means comprising, for example, retaining pins 14, which can be inserted and extracted by manual forcing into and from corresponding seats 15 provided on said mould.

In the example shown in Figure 6, the retention is exerted by spring balls 16 which interfere with the corresponding seats 15 of the moulds.

It is however intended that the quick release means of the moulds may be made up of different solutions which do not however provide for the necessary use of mechanical tools. Preferably, the lower moulds are arranged concentrically in each other and the seats 15 are provided in respective peripheral rings 17 of the moulds, whereas the pins 14 are carried by stems 18, possibly connected to a lifting ring 19 and operating on each mould independently one from the other being actuated by respective actuators.

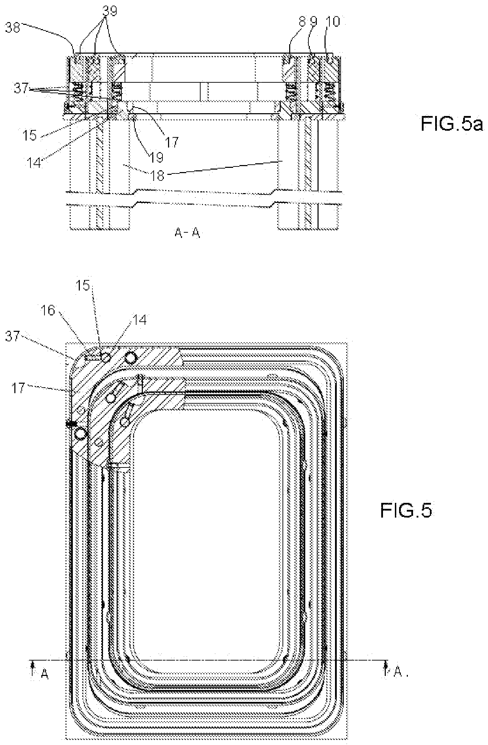

Figure 5a shows, by way of example, the connection between the stems 18 and the ring 19 of the inner lower mould 8.

Advantageously, with this solution the operator can easily lift all the moulds and starting, for example, from the small one can extract them and then insert them all, once the lower section has been cleaned, without the need for mechanical tools.

This solution having extractable mobile mould also allows to change the format and type of trays, e.g. square, round or triangular trays.

For these formats it is simply necessary to arrange a mould with a suitable shape and the same must be done with the upper sealing plate.

In case of non-standard format change, that is with "optional" formats, for example round or triangular, the operator simply has to remove the moulds and replace them with the optional ones, remove the sealing plate and replace it with a suitable one.

For this purpose, the upper section 4 may be provided with a sealing plate 20 provided with a plurality of upper sealing profiles 50, 6, 7 corresponding to respective container V formats to be sealed.

In particular, with reference to figure 4, the sealing plate may be composed of a first fixed plate 21 provided with at least one portion 31 of an outer sealing profile 50 and a second plate 22 removable from the fixed plate and provided with one or more internal sealing profiles 6, 7. In the example described, the removable plate comprises a portion 30 of the outer sealing profile 50 which, when the removable plate 22 is inserted inside the fixed plate 21, matches the portion 31 and completes the outer profile 50. Advantageously, with this solution it is possible to easily replace at least one welding profile of the upper plate according to the format of the moulds or of the movable mould present in the lower section of the sealing station. In operation, the film F and a container V of a selected format are fed to the sealing station 3 with the sections 4 and 5 in a displaced loading position. Once the container is in the sealing position, the movements 12 vertically actuate the lower section 5 to bring into a sealing position a container V with the peripheral edge resting on the upper edge 38 of the relevant mould preferably provided with a gasket 39.

The movement may continue until the peripheral edge 35 of the mould 8-10 is overlapped with the corresponding upper profile 50-6-7, with or without an intervention of the movement 11 of the upper section 4.

In the example described, the profiles 50-6-7 are heated profiles which perform a heat-sealing of the film F on the edge 36 of the container carried by the mould.

In this case, once heat sealing has been performed, there are therefore provided peripheral blades 37, of known type, which cut the film F along the edge of the mould, which can thus be wound in the recovery coil 33 while the sealed container V is moved to an outlet 34, for example a conveyor belt.

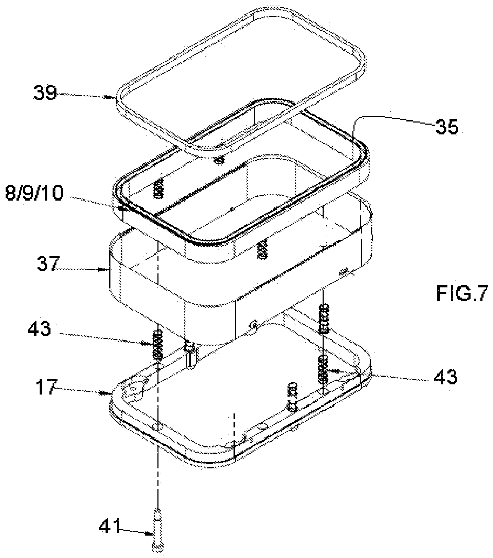

In greater detail, and in the embodiment example of the moulds illustrated in Figure 7, due to the superimposing with the profiles 50/6/7, the mould 8/9/10 is lowered with respect to the blade 37 against the action of compression springs 43 driven by pins 41 and interposed between the side wall of the mould and the lower ring 17, until the peripheral cut of the film is performed.

In different embodiments, it is provided that the sealed container V is extracted from the mould by lowering the mould itself or lifting an inner support plate 35, and then removed manually or by mechanical pushers 40 which carry the container on an output belt 34.

When the user intends to clean the lower section 5, it will be sufficient to move the sections 4 and 5 to a displaced position and manually extract the moulds 8-10, forcing the mechanical resistance of the retaining pins 14.

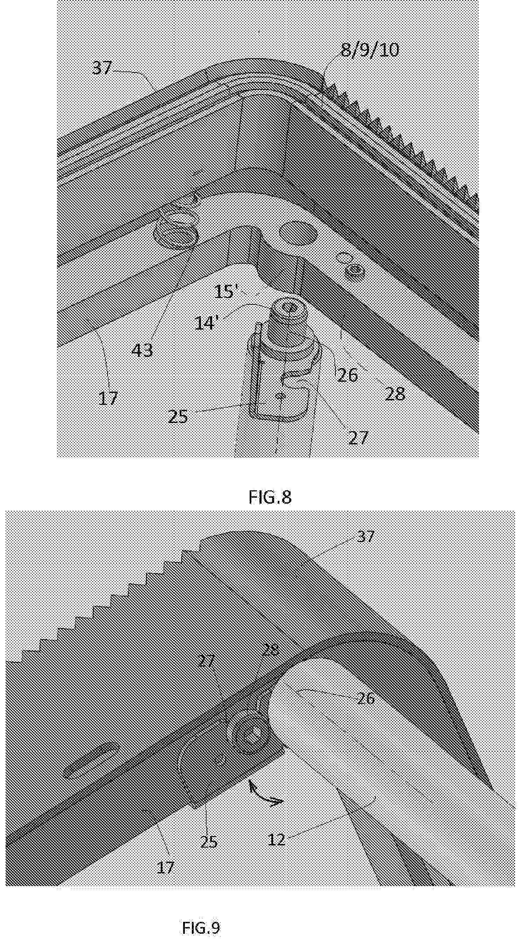

Moreover, if the format of the moulds is to be changed, by size or shape, it will be sufficient to insert in the section 5 moulds of the desired shape and dimensions, remove the upper plate 22, and insert a selected one having the profiles corresponding to the selected formats. Figures 8 and 9 show in detail, respectively, a top view and a bottom view of a preferred embodiment of the quick release means for the lower moulds.

In this embodiment, the retaining pins are pins 14' which can be inserted and extracted by quick release by means of retaining tabs 25 which can be operated, for example manually, between an open release position and a closed engaging position wherein a slot 27 of the tab 25 engages with a corresponding groove 28 integral to the mould and made, for example, by a pin having a T-shaped profile fixed to the mould itself.

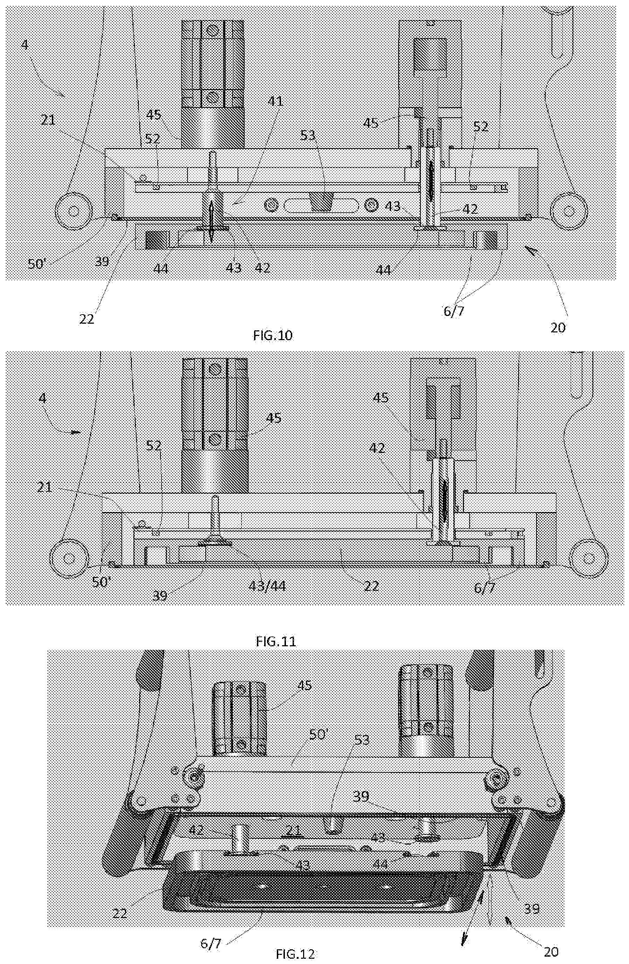

With reference to figures 10-12, it is disclosed a detail, respectively, in side view in an extracted configuration, in side view in an operative configuration and in perspective view of a preferred embodiment of the means for engaging and extracting the upper welding plate.

In this embodiment, the plate 22 is provided with two welding profiles 6/7 and can be extracted from an upper fixed plate 21 provided with heating means 52, for example electric resistors, thanks to movement means 41 which can be actuated to move the removable plate 22 approaching and moving away from the fixed plate 21 between a locked operating position and in thermal contact with the fixed plate (figure 11), for example inside a bell 50' carrying the gasket 39, and a extraction position which is free with respect to the fixed plate (figures 10, 12) and outside the bell 50'.

Preferably, the movement means comprise stems 42 provided with engaging profiles 43, for example T-shaped profiles which can be inserted slidingly into corresponding guides 44 of the removable plate 22 and which can be actuated by actuators 45 (for example oil hydraulic cylinders) to pass between a retracted position corresponding to said operating position of the removable plate 22, preferably with the aid of centring means 53, for example a conical geometric coupling, and a position corresponding to said extraction position of the removable plate, wherein the plate can be easily gripped by an operator and extracted by sliding the profiles 43 in the guides 44.

Alternatively, the movement means 241 can be manually manoeuvred by an operator.

## Claims

1. Apparatus for manufacturing containers (V) with a film (F), comprising:
a sealing station (3) arranged to seal the containers with a portion of said film and comprising an upper section (4) and a lower section (5) which can be superimposed on command, wherein said upper section (4) is provided with at least one upper sealing profile (50, 6, 7) and said lower section is provided with at least one mould (8, 9, 10) removably disposed in said lower sealing station for accommodating at least one container having a selected format of a plurality of formats,
means (11, 12) for superimposing said at least one upper profile with said at least one lower mould, **characterized in that** said upper section (4) is provided with a sealing plate (20) consisting of a first fixed plate (21) and a second plate (22) removable from the fixed plate and provided with at least one upper sealing profile (50, 6, 7).

2. Apparatus according to claim 1, comprising movement means (41) operable to move said removable plate (22) between an operating position locked to the fixed plate and an extraction position which is free with respect to the fixed plate.

3. Apparatus according to claim 2, wherein said movement means comprise a plurality of stems (42) provided with engaging profiles (43) which can be inserted slidingly into corresponding guides (44) of the removable plate (22) and which can be actuated by means of actuators (45) to pass between a retracted position corresponding to said operating position of the removable plate (22) and a position corresponding to said extraction position of the removable plate.

4. Apparatus according to claim 2, wherein said movement means can be manually actuated.

5. Device according to one of the preceding claims, wherein said upper section (4) is provided with a sealing plate (20) provided with a plurality of upper sealing profiles (50, 6, 7) corresponding to respective container formats to be sealed.

6. Apparatus according to claim 5, wherein said sealing plate is composed of said fixed plate (21) comprising heating means (52) and of said second plate (22) provided with one or more internal sealing profiles (6, 7).

## Patentansprüche

1. Vorrichtung zum Herstellen von Behältern (V) mit einer Folie (F), aufweisend:
eine Siegelstation (3), die angeordnet ist, um die Behälter mit einem Abschnitt der Folie zu versiegeln, und einen oberen Abschnitt (4) und einen unteren Abschnitt (5) umfasst, die durch Steuerbefehle übereinander angeordnet werden können, wobei der obere Abschnitt (4) mit mindestens einem oberen Siegelprofil (50, 6, 7) versehen ist und der untere Abschnitt mit mindestens einer Form (8, 9, 10) versehen ist, die in der unteren Siegelstation zum Aufnehmen von mindestens einem Behälter mit einem aus mehreren Formaten ausgewählten Format entfernbar angeordnet ist,
Mittel (11, 12) zum übereinander Anordnen des mindestens einen oberen Profils mit dem mindestens einen unteren Formwerkzeug,
**dadurch gekennzeichnet, dass** der obere Abschnitt (4) mit einer Siegelplatte (20) versehen ist, die aus einer ersten feststehenden Platte (21) und einer zweiten Platte (22), die von der feststehenden Platte entfernbar und mit mindestens einem oberen Siegelprofil (50, 6, 7) versehen ist, besteht.

2. Vorrichtung nach Anspruch 1, aufweisend Bewegungsmittel (41), die betreibbar sind, um die entfernbare Platte (22) zwischen einer an der feststehenden Platte arretierten Betriebsposition und einer in Bezug auf die feststehende Platte gelösten Entnahmeposition zu bewegen.

3. Vorrichtung nach Anspruch 2, wobei die Bewegungsmittel mehrere Schäfte (42) aufweisen, die mit Eingriffsprofilen (43) versehen sind, welche gleitend in entsprechende Führungen (44) der entfernbaren Platte (22) eingeführt werden können und welche mittels Aktoren (45) betätigt werden können, um zwischen einer eingefahrenen Position, die der Betriebsposition der entfernbaren Platte (22) entspricht, und einer Position, die der Entnahmeposition der entfernbaren Platte entspricht, verfahren zu werden.

4. Vorrichtung nach Anspruch 2, wobei die Bewegungsmittel manuell betätigt werden können.

5. Vorrichtung nach einem der vorhergehenden Ansprüche, wobei der obere Abschnitt (4) mit einer Siegelplatte (20) versehen ist, die mit mehreren oberen Siegelprofilen (50, 6, 7) versehen ist, welche entsprechenden zu versiegelnden Behälterformaten entsprechen.

6. Vorrichtung nach Anspruch 5, wobei sich die Siegelplatte aus der feststehenden Platte (21), die Heizmittel (52) aufweist, und der zweiten Platte (22), die mit einem oder mehreren inneren Siegelprofilen (6, 7) versehen ist, zusammensetzt.

## Revendications

1. Appareil pour fabriquer des contenants (V) avec un film (F), comprenant :
une station d'étanchéité (3) agencée pour étanchéifier les contenants avec une partie dudit film et comprenant une section supérieure (4) et une section inférieure (5) qui peuvent être superposées sur commande, dans lequel ladite section supérieure (4) est pourvue d'au moins un profil d'étanchéité supérieur (50, 6, 7) et ladite section inférieure est pourvue d'au moins un moule (8, 9, 10) disposé de manière amovible dans ladite station d'étanchéité inférieure pour recevoir au moins un contenant présentant un format sélectionné parmi une pluralité de formats,
des moyens (11, 12) pour superposer ledit au moins un profil supérieur audit au moins un moule inférieur,
**caractérisé en ce que** ladite section supérieure (4) est pourvue d'une plaque d'étanchéité (20) constituée d'une première plaque fixe (21) et d'une deuxième plaque (22) pouvant être retirée de la plaque fixe et pourvue d'au moins un profil d'étanchéité supérieur (50, 6, 7).

2. Appareil selon la revendication 1, comprenant des moyens de déplacement (41) permettant de déplacer ladite plaque (22) amovible entre une position de fonctionnement verrouillée sur la plaque fixe et une position d'extraction qui est libre par rapport à la plaque fixe.

3. Appareil selon la revendication 2, dans lequel lesdits moyens de déplacement comprennent une pluralité de tiges (42) pourvues de profils de mise en prise (43) qui peuvent être insérés de manière coulissante dans des guides (44) correspondants de la plaque (22) amovible et qui peuvent être actionnés aux moyens d'actionneurs (45) pour passer entre une position rétractée correspondant à ladite position de fonctionnement de la plaque (22) amovible et une position correspondant à ladite position d'extraction de la plaque amovible.

4. Appareil selon la revendication 2, dans lequel lesdits moyens de déplacement peuvent être actionnés manuellement.

5. Dispositif selon l'une quelconque des revendications précédentes, dans lequel ladite section supérieure (4) est pourvue d'une plaque d'étanchéité (20) pourvue d'une pluralité de profils d'étanchéité supérieurs (50, 6, 7) correspondant à des formats de contenant respectifs à étanchéifier.

6. Appareil selon la revendication 5, dans lequel ladite plaque d'étanchéité est composée de ladite plaque fixe (21) comprenant des moyens de chauffage (52) et de ladite deuxième plaque (22) pourvue d'un ou de plusieurs profils d'étanchéité internes (6, 7).
